# EUROPEAN PATENT APPLICATION

(11) **EP 4 099 245 A1**
(43) Date of publication of application: **07.12.2022**
(21) Application number: 21177744.6
(22) Date of filing: 04.06.2021
(51) Int. Cl.: G06Q 10/10, H04W 12/06, H04W 12/47, H04W 12/48, H04W 12/72, H04W 12/71, H04L 29/06, H04L 29/08, G06F 21/32

(54) **DATA TRANSFER SYSTEM**

(71) Applicant: Trustybell GmbH, 82166 Gräfelfing (DE)
(72) Inventor: BÜNGER, Constantin Eberhard, 65479 Raunheim (DE); SCHAFFNER, Wilfried, 1130 Wien (AT)
(74) Representative: Grünecker Patent- und Rechtsanwälte PartG mbB

(57) **Abstract**

The present invention relates to a method for securely transmitting an electronic data file, in particular, a document, from a first user using first terminal equipment to a second user using second terminal equipment over a network. Access to the electronic data file by the second user (receiver) requires the second user to verify his or her personal identity based on an official document identifying the person. After successful verification, access to the data file by the second user is granted and a feedback to the first user is generated confirming that the data file has been accessed. Consequently, at the same time this confirms successful verification of the identity of the receiver. Access to the data file may be limited to a particular person (or group of persons) that has been predetermined by the first user (sender) in advance, in which case the feedback may preferably include respective information confirming that the predetermined person has accessed the file. Alternatively, any person who was able to successfully verify his or her identity can be granted access to the data file.

## Description

### FIELD OF THE INVENTION

The present invention relates to systems and methods for transferring electronic data between users connected to a data communication network. More specifically, the present invention relates to data transfer systems and methods that are capable of verifying the identity of a receiver of an electronic data file.

### BACKGROUND ART

In recent years, electronic means of transmitting information, including documents and other data files have gained increasing popularity. In many situations, such as fields of business, as well as information exchange between private organisations and state authorities, as well as in the private field or between different official authorities, electronic data communication has now replaced conventional data communication via paper copies of documents as offered by postal services. Such electronic means of transmitting information include well-known applications such as email but also other forms of data communication, wherein, for instance, data files are uploaded to a network and may be accessed by anybody or particularly authorized persons from remote.

What is desirable is to have a functionality, within the electronic transmission of documents or other information, so as to enable a person sending the document (sender) to get a feedback about the information having been delivered and to whom the information has been delivered, with a certain degree of trustworthiness (i.e. including a verification of the identity of a person who has received or accessed a document). Such a functionality is particularly important within fields, where a timely and verified reception of documents is crucial, such as in business, in administration, or in the judiciary field.

When conventional postal services are used for such purposes, this can be realized in a straightforward manner but requiring the involvement of personnel to a rather large extent. For instance, a clerk delivering a postal document, may check the identity of a person receiving the document, by requesting the receiving person to show an official document identifying the person, and/or to confirm the acknowledgement of receipt by means of signature on a respective piece of paper (for instance, the different forms of registered letters). In the field of pure electronic communications, wherein, however, no humans are involved in the actual transportation of the information any longer, this cannot be realized in a straightforward manner.

### SUMMARY OF THE INVENTION

The present invention aims to address the above identified drawback and to provide a way of electronically transmitting information from a sending person to receiving person, with verified feedback of reception.

This is achieved by the features of the independent claims.

According to a first aspect of the present invention, a method of transmitting an electronic data file from a first user via a network, for being accessed by a second user, is provided. The method comprises the steps of uploading the data file being addressed to a receiver address to the network, by means of first terminal equipment of the first user and generating a message that the data file has been uploaded and transmitting the message to second terminal equipment of the second user, associated with the receiver address. The method further comprises the step of inputting an instruction for access to the data file, at a second terminal equipment. Further, the method comprises the step of, upon getting the instruction, the second terminal equipment issuing a request to verify the identity of the second user using the second terminal equipment. The method further comprises the steps of verifying the identity of the second user, on the basis of an official document identifying the second user and, after successful verification of the identity of the second user, granting the second user access to the data file at the second terminal equipment. Further, the method comprises the steps of generating and transmitting a message to the first user that the data file has been accessed.

According to a second aspect of the present invention, a system for transmitting an electronic data file from a first user via a network, for being accessed by a second user, is provided. The system comprises first terminal equipment of the first user and second terminal equipment of the second user. The first terminal equipment is adapted to upload the data file being addressed to a receiver address to the network and to generate a message that the data file has been uploaded and transmit the message to the second terminal equipment associated with the receiver address. The second terminal equipment comprises a user interface for inputting an instruction for access to the data file and is adapted to, upon getting the instruction, issue a request to verify the identity of the second user using the second terminal equipment. The system further includes equipment for verifying the identity of the second user, on the basis of an official document identifying the second user and is adapted to grant the second user access to the data file at the second terminal equipment, after successful verification of the identity of the second user and to generate and transmit a message to the first user that the data file has been accessed.

It is the particular approach of the present invention to request a verification of the identity of a receiver of a data file electronically transmitted over a network and granting access to the electronic data file only upon successful verification. A feedback is given to a sender of the data file, by means of a respective message that the data file has been accessed. Even if, in the simplest case, such feedback is given without including any details about the receiver, the mere fact that the file has been accessed confirms successful verification of the identity of the receiver, because otherwise an access to the data file would be prohibited.

Electronic data files transmitted in accordance with embodiments of the present invention are, in particular, files including data of a document (electronic document), but are not limited to those. The present invention is equally applicable for transmitting other kinds of data files such as video data files, image data files or others.

Preferably, the step of verifying the identity of the second user includes the steps of capturing a face image of the second user, as a first image, capturing an image of the official document identifying the second user, as a second image, wherein the official document includes a face image of the second user together with further data identifying the second user, and verifying the identity of the second user at least by comparing the first image with the face image included in the second image, by means of technical image analysis.

In embodiments, the first image and the second image are captured by the same camera. More specifically, the camera may be directly included in the terminal equipment of the second user. In particular, the terminal equipment of the second user may be a smart phone. Alternatively, the terminal equipment of the second user may be a laptop or another computing device. For enhancing security of the verification, taking the second image may include taking an image of the official document in front of the face of the second user, i.e. the person identified by the official document, as a background, so as to verify the presence of the person identified by the document at the given instance of time.

Preferably, a series of first images and/or a series of second images is captured. The individual images of the series of first images may differ from each other by different orientations of the face of the second user. Specifically, the second user may turn the head left and right, while a series of first images is captured. The individual images of the series of second images may differ from each other by a different tilt of the official document. This enables to render security identifiers such as watermarks visible. Thus, using a series of first and/or second images (short video or "movie" sequences) in the verification of the identity may increase security.

In alternative preferred embodiments, the step of verifying the identity of the second user includes the steps of reading information from a wireless tag included in the official document identifying the second user, by the terminal equipment of the second user and verifying the identity of the second user on the basis of the read information. In particular, the wireless tag included in the official document may be a Radio Frequency Identification (RFID) tag storing at least the information readable or optically accessible from the document (completely or partially). For instance, the terminal equipment of the second user may be equipped with an RFID reader that reads out at least basic data such as a name, address and date of birth of the holder of the document (without being restricted or limited to these).

In still alternative preferred embodiments, the terminal equipment of the second user stores, in a predetermined application, data of the official document identifying the second user. The step of verifying the identity of the second user is then performed on the basis of the data of the official document stored in the terminal equipment of the second user. In other words, an application function such as the one known as "electronic ID card or elD" available in smart phones and directly including verified personal data of the holder of the smart phone such as those included in the official document can be used for verifying the identity, in a similar manner as this can be done by reading the respective data from an RFID tag included in a hardcopy version of the document.

The foregoing examples of alternative embodiments have the advantage of being particularly simple in implementation, by making use of the technical possibilities available in contemporary user equipment such as smart phones.

Preferably, the electronic data file includes electronic data of a document and the method further comprises the steps of the second user electronically signing the document, after successful verification of the identity of the second user and the second user accessing the data file, and the second user sending the signed document back to the first user. Thereby, a function similar to a conventional "registered letter" transmission can be implemented, wherein a receiver has to confirm receipt of a document by his or her signature.

According to preferred embodiments, the verifying step may further comprise the step of comparing data extracted from the official document with data pre-stored in a database. In accordance with the different alternatives summarized above, data may be extracted from the official document either optically, such as by capturing an image and subsequently applying technical means such as optical character recognition (OCR), or image analysis, as well as by extracting the respective data from an RFID signal or directly from an electronic copy of the document stored in an application such as an elD application. For instance, in a database associated with the terminal equipment used by the second user, there may be a list including a plurality of predetermined persons which are entrusted to use the terminal equipment to access documents and other data files with verified identification. The names of the persons included in the list ("trusted persons") may be stored in correspondence with further data that can be extracted from the official document available in real-time, such as address, place of birth, kind and number of the official document. In this case, the identity of the second user will be successfully verified only if data corresponding to those stored in the database in correspondence with the name of the trusted person can be extracted from the document in the verification step. The database may be included in the terminal equipment used by the second user itself or in another device, located in close proximity or remotely from the terminal equipment and connected with the terminal equipment in a secure manner.

According to preferred embodiments, the second user who is allowed to get access to the data file is limited to a particular person. In that case, the method may further comprise the steps of the first user defining the particular person as the second user allowed to get access to the data file by entering data included in the official document identifying the second user (which has thus be known to the first user in advance) and transmitting the entered data to the second terminal equipment before the step of uploading the data file to the network. Respective data that can be extracted from the official document may include, without being limited to those, any one of date of birth, number of the official document, first and second name, citizenship or any combination thereof. Hence the first user can define criteria for defining the particular person that is granted access. Frequently, the complete name (surname and given name) will be used, possibly in combination with further criteria. But other criteria, such as the combination of document number and citizenship, can be used as well. Thereby, the first user can also determine that not only a single person but plural particular persons (a group of persons) fulfilling certain criteria derivable from their official documents may be granted access. This is, for example, likely to be the case if only the surname is defined as a criterion. The first user may also allow access by a group of plural persons by defining a narrow criterion but setting plural alternative options for the criterion to be fulfilled (i.e., for example, Musterman, Max, born on 01.03.1973, OR Müller, Marcus, born on 12.09.1945).

The method then further comprises the steps of comparing the entered data defining the particular person with respective data extracted from the official document in the step of verifying the identity of the second user and granting the second user accesses data file only if the entered data and the data extracted from the official document coincide. In other words, in that case, a successful verification does not only include to determine the identity of the receiver and verify the same against an official document but further to confirm that the receiver is indeed the intended person, predefined by the sender.

According to preferred embodiments, further, information indicating the verified identity of the second user is provided to the first user. This includes the steps of generating a signal including verified data identifying the second user on the basis of data extracted from the official document identifying the second user and transmitting this signal to the first terminal equipment of the first user. For instance, the signal may include the name, address, place and date of birth as well as other personal data such as the number of the official document characterizing the receiver (second user). The signal may further include image information from the image included in the official document. In case of a verification by comparing a first image of the face of the second user with a second image of the face of the second user, data of said second image can be included in the signal as well.

In addition, or alternatively, further information may be included in the feedback message confirming access of the data file to the first user. This further information may, for instance, be a date and time when the data file was accessed. Also, information about a location of the second user when accessing the data file may be used. Such information may, for instance, be inferred when the (mobile) terminal equipment of the second user is provided with a respective self-location functionality, for instance by means of a satellite navigation system such as GPS. Alternatively, at least approximate location data may, for instance be inferred from a mobile cell of a cellphone network to which the terminal equipment of the second user was logged in at the time of accessing the data file or by means of an IP address assigned to a predetermined location.

In accordance with preferred embodiments, a mutual identity verification of both users (sender and receiver) can be implemented. For this purpose, the identity of the first user is verified before the step of uploading the data file as a network by the first user. Verified information indicating the identity of the first user may then be transmitted to the second user. Alternatively, a mere indication that the first user has successfully verified his or her identity may be transmitted to the second user. Also, in embodiments, the first user may be allowed to upload the electronic data file only after successful verification of his or her identity. In other words, uploading the electronic data file to the network by the first terminal equipment of the first user may be disabled until the first user has successfully verified his or her identity and enabled only upon successful verification.

In this case, the means and methods applicable for verifying the identity of the first user (sender) are generally the same as those applicable for verifying the identity of the second user. In particular, this may be implemented by capturing a face image of the first user, as a third image and an image of an official document identifying the first user, as a fourth image, wherein the official document includes a face image of the first user together with further data identifying the first user. The identity of the first user may then be verified at least by comparing the third image with the face image included in the fourth image, by means of technical image analysis. Alternatively, the method summarized above using information right from a wireless tag included in the official document of the first user, from official document data stored in an application of the terminal equipment of the first user such as an electronic ID application, can be used.

Further, according to preferred embodiments, the data file uploaded to the network is sent to the second terminal equipment but is electronically protected from access until successful verification of the identity of the second user. In particular, the data file may be directly sent to the second terminal equipment, to which it is addressed but it may also be sent via other system components of the network, such as a particular server. In particular, the server may be a part of a file hosting service (cloud storage service) on the network such as Dropbox or Google Drive. In that case, access to the file uploaded to the cloud is granted only to a (second) user who has successfully verified his or her identity. Optionally the cloud (cloud server) may also restrict access for uploading (adding) files to the cloud to (first) users who have successfully verified their identity.

More preferably, the protection is implemented by encryption password protection and, upon successful identity verification, the second user is provided with a decryption key or password.

Further, in preferred embodiments, access to the data file by the second user is rejected when the verification of the identity of the second user is not successful.

In embodiments, the data file is uploaded to the server on the network, which grants the second user access to the file by allowing the second user to download the file to the second terminal equipment, upon successful verification of the identity of the second user. In alternative embodiments, wherein the data file is uploaded to a server on the network, the server grants the second user access to the file by allowing the second user remote access to the data file the server, upon successful verification of the identity of the second user. In these cases, the server may generate and transmit the message to the first user that the data file has been accessed. Alternatively, the said message can be generated and transmitted by the terminal equipment of the second user.

Further features and advantages of the present invention are set forth in dependent claims.

### BRIEF DESCRIPTION OF THE DRAWINGS

Additional features and advantages of the present invention will become apparent in the following and more particular description as illustrated in the accompanying drawings, wherein:
- Fig. 1: provides a general overview of a system according to embodiments of the present invention;
- Fig. 2: is a flowchart giving an overview of the method steps performed by the terminal equipment of a first user transmitting and a second user being the receiver of an electronic data file, in accordance with embodiments of the present invention;
- Fig. 3: is a flowchart showing details of an exemplary processing for verifying the identity of a user (second user) according to embodiments of the present invention; and
- Fig. 4: is a flowchart illustrating the steps of embodiments of the present invention for implementing an electronic data transmission function with an acknowledgement of reception by an electronic signature of a verified receiving person.

### DETAILED DESCRIPTION

The present invention relates to a system and method for transmitting electronic data via a network, wherein a verification of the identity of a receiver of the electronic data is ensured.

Details of the present invention will be described and explained in the following detailed description, with reference to the attached drawings.

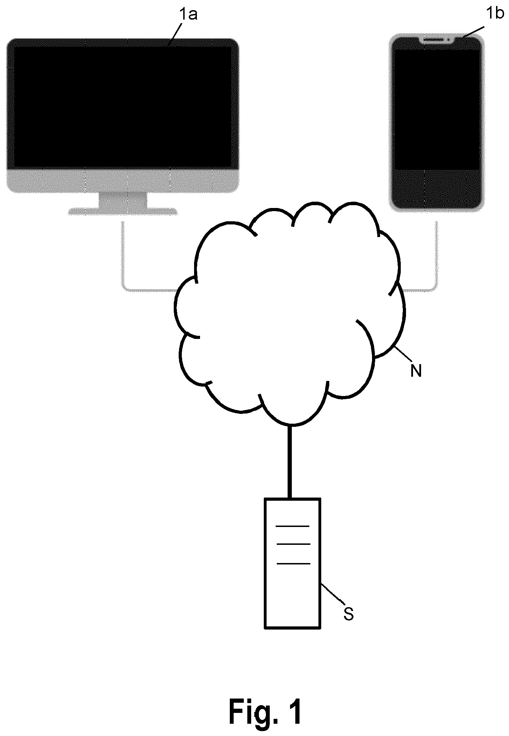

Fig. 1 is an overview of an exemplary system according to the present invention, useful for carrying out a method according to the present invention.

The drawing shows terminal equipment 1a of a first user and terminal equipment 1b of a second user that are interconnected via a network N. Although terminal equipment 1a of the first user is exemplified here by means of a personal computer and terminal equipment 1b of the second user is exemplified by means of a smart phone, the present invention is not limited to this. Any terminal equipment that is suitable for sending data files over the network can be used as the terminal equipment 1a of the first user. This includes but is not limited to personal computers, such as desktop computers or laptop computers, smart phones, tablet computers, or personal digital assistants (PDA), as well as a combination of these. Any terminal equipment that is suitable for performing the verification of the identity of the user and for granting access to the data file in accordance with the present invention can be used as the terminal equipment 1b of the second user. This includes but is not limited to personal computers, such as desktop computers or laptop computers, smartphones, tablet computers, or personal digital assistants, as well as combinations of these.

The drawing of Fig. 1 further shows a server S to be connected to the network N. Although shown in the present exemplary drawing, the server S represents an optional system component and may perform various functions such as (permanently or temporarily) storing the data file to be accessed by the second user, performing certain steps of a verification process and others. However depending on particular embodiments, functions that may be realized by means of the server S can also be performed by other system components, in particular, the terminal equipment 1b of the second user. For performing functions, in particular in verifying the identity of the second user, the server S may be equipped with, or connected to necessary databases (not shown in the drawing). Also, a plurality of servers S may be involved in implementing the present invention in particular embodiments (although not shown in Fig. 1). In other words, various functions such as storing the uploaded data file or verifying the identity may be implemented on a single server or distributed over plural servers.

In particular embodiments, the server S may be a cloud server representing a cloud service on the network (e.g. the Internet) where data files may be uploaded, downloaded and accessed. The cloud server may then regulate uploading, downloading, or accessing files on the cloud by requiring verification of the identity according to the present invention.

Examples of a network N usable in the framework of the present invention are, for instance, the Internet or any Wide Area Network (WAN), a Local Area Network (LAN) or Wireless LAN (WLAN), or other suitable networks, including telephone networks, in particular cellular phone networks, without being limited to these.

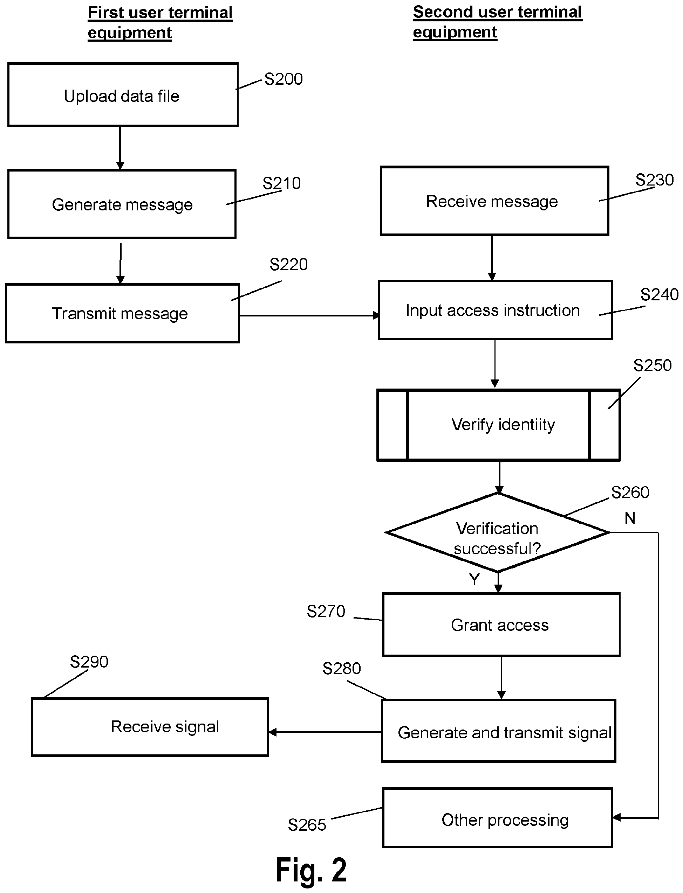

Fig. 2 gives an overview of an overall workflow of a method according to the present invention.

In initial step S200, the first user uploads the data file to the network by means of the first terminal equipment for being accessed by a second user. For this purpose, the uploaded data file should be associated with address information, wherein the address information includes at least information associated with some person or site such as an email address or login information used by a particular person or at a site to which the data file is addressed for logging into the network or to a particular application or service suitable for accessing data files.

In subsequent step S210, at the terminal equipment of the first user, a message is generated including information that the data file has been uploaded in step S200.

In the following step S220, the message is transmitted from the terminal equipment of the first user to the terminal equipment of the second user. More specifically, the message is transmitted to terminal equipment that is associated with the address information associated with the uploaded data file. This can be done, for instance, by transmitting an email, an SMS (Short Message Service) message or using any other messaging services or other suitable electronic communication means established between the first and the second user, via a network (either the same network to which the data file was uploaded (e.g. the Internet) or a different network (e.g. cell phone network)).

The message is received at the side of the second user (terminal equipment of the second user) in step S230.

In order to be able to access the data file, the second user inputs an instruction to access the data file at his or her terminal equipment (second terminal equipment). This can be done, for instance, by "clicking" a respective icon representing the data file on a screen. In particular, the instruction may be input at the same piece of terminal equipment via which the message has been received, or may be input at a different piece of terminal equipment associated with the second user. For instance, a smart phone or a personal computer may be used for both receiving the message that the file was uploaded in step S230 and inputting the instruction to access the data file in step S240. In an alternative exemplary and non-limiting embodiment, the second user may, for example, receive the message via SMS at his or her smart phone (or other suitable cell phone) and use a personal computer or tablet for inputting the instruction to access the file.

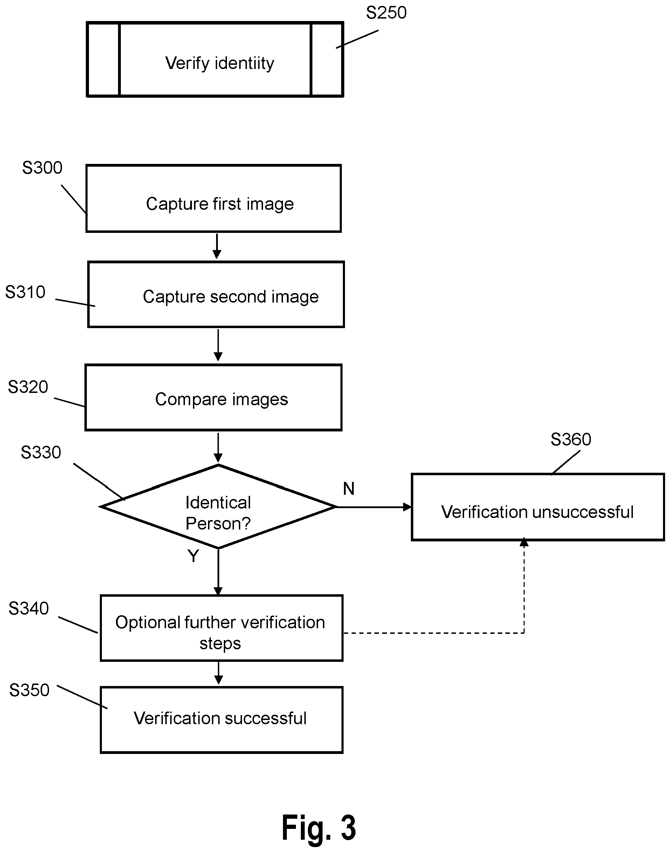

Upon receiving the instruction to access the uploaded data file, a request to verify the identity of the second user is issued by the second terminal equipment. The identity of the second user is verified in step S250. There exist various alternative processes to verify the identity of the second user, in alternative embodiments of the present invention. Details about the particular possibilites to implement this step will be described further below with reference to Fig. 3. In any case, the verification step involves extracting data from an official document identifying the second user. This data may include, for example, a name (e.g. full name or surname), date of birth, place of birth, address data, image data, a number or code of the official document (e.g. a passport, identity card, driving license or similar).

Processing then proceeds to subsequent step S260, in which it is judged whether or not the verification of the second user was successful. A successful verification includes, in particular, secure determination of the identity of the person of the second user. If no determination of the identity of the person who intends to access the file as the second user is possible, or if during the verification of the identity there were any inconsistencies that may give raise to doubt, the verification was unsuccessful.

In case of successful verification (S260: Y) the processing flow proceeds to step S270. In this step, access to the uploaded file is granted to the second user. As summarized above, theyre exist various possibilities for implementing this step. Either, the uploaded file is stored at a server of the network and remains there for being remotely accessed from the terminal equipment of the second user. In that case, information for unlocking a means of protection foreseen for the data file at the server, such as a decryption key or pass phrase (password) is transmitted to the user's second terminal equipment when verification of his or her identity was successful. Alternatively, the uploaded file may be stored at the server without the possibility of remote access, and a download of the file to the second terminal equipment of the second user will be initiated once successful verification was confirmed. Further alternatively, the data file may already be present at the second terminal equipment but is protected by password and/or encryption or other suitable protection means, until successful verification of the identity of the second user was confirmed. In that case, a respective password or decryption key is provided, so that the second user can access the file. Alternatively, access to the file may be automatically given when successful verification of the identity of the second person is confirmed at the second terminal equipment. As will be detailed below, in embodiments, the verification of the identity of the second user may be performed partially or completely at the second terminal equipment of the second user and respective information confirming successful verification is provided to a server holding the data file, if applicable. Alternatively this step may be partially or completely performed at a server on the network (which optionally may be a server holding the data file), in which case respective information confirming successful verification is provided to the terminal equipment of the second user and/or a server holding the data file.

When the second user has been granted access to the data file and accesses the data file, in subsequent step S280, a message is generated and transmitted to the first terminal equipment of the first user that the data file has been accessed. In view of the prerequisite that the second user must identify himself or herself, generation and transmission of this message automatically confirms successful verification, because otherwise no access would have been possible. It is noted that although the transmission of the message is shown to be performed by the second terminal equipment of the second user in the drawing of Fig. 2, in embodiments, wherein a server is involved in either or both of the identity verification and the data file access, the message may be generated and transmitted at the server instead.

In step S290, the message transmitted in step S280 is received at the first terminal equipment of the first user.

If the verification of the second user was not successful (S260: N), processing proceeds to step S265, which summarizes different possible alternative processing steps. Generally, in that case, no access by the second user to the uploaded data file is allowed (i.e. the access is rejected). Optionally, a message to inform about this can be generated and transmitted to the first terminal equipment of the first user. Also optionally, the second user may be informed about a reason for rejection so as to possibly address any problem in the verification that might be remedied.

More specifically, an exemplary processing flow of step S250 of Fig. 2 is shown in Fig. 3.

In step S300, an image of the face of the second user (receiver) is captured, as the first image. As indicated above, optionally a series of first images (short movie) may be captured instead of a single still image, in order to enhance security in identifying the essential features correctly. For this purpose, the second user may be asked to turn his or her head left and right during capturing of the series of first images.

In step S310 an image of an official document presented by the second user is captured, as the second image. The official document should include a photograph of the face of the person to be identified. As indicated above, a series of second images (short video sequence) may be captured instead of a single still image, in order to enhance security. For this purpose, the second user may be asked to tilt the official document during capturing of the series of second images so as to make security identifiers such as watermarks and holographic features identifiable.

The particular sequence of the above two steps is not essential for the present invention, and may also be vice versa. As a further element of security, it is also possible to capture an image where the second user holds the official document in front of himself or herself, so as to verify the presence of the real person to be imaged, together with the document. It is also possible to capture, in addition to the image of the official document as a whole, a further specific image of the portion of the official document including the image of the holder, which will then take the role of the second image for image comparison. For this purpose, the second user (person to whom the data file is addressed) has to move the image portion of the official document close to the camera, or has to use the zoom function of the camera for capturing the specific image of the face image included in the document. Further, in verifying the presence of the real person together with the document, the user may move his or her hand in front of his or her face and of the official document.

Further, and in addition to the before described, an exemplary method according to embodiments of the present invention may foresee that the user moves and/or tilts the official document in front of the camera, in order to prove the presence of specific properties of the official document such as watermarks or holographic elements.

In following step S320 the image portion of the face of the holder of the official document is extracted from the second image and compared to the face image of the real person in the first image. Respective procedures of technical image analysis are well known to a skilled person and a detailed description thereof is therefore herein omitted. In particular, for a verification, certain biometric data such as shape of and distances between predetermined features of the human face are extracted from the images and compared between the images. Such features may include the eyes, mouth and nose of the persons, without being limited to these.

In subsequent step S330, on the basis of the comparison result in step S320, it is judged whether both images represent the same person.

In the case when it cannot be unambiguously determined that both images show an identical person (S330: N), processing proceeds to step S360, wherein it is determined that the verification was unsuccessful. Processing then proceeds to step S265 of Fig. 2.

In the case when it was determined that both images show an identical person (S330: Y), processing proceeds to step S340 (optional) and step S350. In step S350, it is determined that the verification was successful and processing proceeds to step S270 of Fig. 2.

Optionally, after successful comparison of the two face images of the second user in steps S320 and S330, further verification steps may be performed, which are summarized in step S340. Such additional identification steps may, for instance, include the verification of data extracted from the official document against a pre-stored database. The processing may be arranged so that a person intending to be the second user will be verified only, if the data extracted from the official document presented match the respective data in a respective entry of the pre-stored database. The database may be included in the second terminal equipment or may be included in a separate device, located at the location of the terminal device or at a remote location, such as an additional server which can be accessed over a secure connection. In particular, the database may include a list of persons who are entrusted to access documents in accordance with the present invention ("trusted users"). If a person who intends to use the system was not in the list (or whose identity with a person included in the list could not be unambiguously verified), verification is considered unsuccessful and processing may further proceed to step S360, even if identity of the persons in the images was confirmed, which is indicated by the dashed line from step S340 to step S360 in the flowchart.

In particular embodiments, the further processing steps summarized under S340 ("Optional further verification steps") may include the verification that a person intending to access the data file is a particular person to whom access to the data file has been limited in advance, by being pre-set by the first user (sender). In that case, data characterizing the particular person have to be entered by the first user into the system and transmitted to the terminal equipment of the second user (and/or a server which respective verification steps may optionally be performed). The respective data are then extracted from the second image, i.e. the image of the official document and compared with those data provided by the first user to define the particular second user may access the data file. Only in case this further verification step is successful, i.e. the data extracted from the second image of the official document coincide with those data provided by the first user, the verification as a whole is considered successful. Otherwise verification is considered unsuccessful and access to the data file is denied. The respective data may be extracted from the official document by known methods, such as optical character recognition (OCR). Also, for transmitting the data defining the particular person allowed to access the data file, either the same network to which the data file is uploaded, or different network can be used.

Also, in advance of the actual verification of the identity as described, a qualified login of the second user may be necessary in order to first verify that the second user is an authorized user of the system. A respective user account may be linked to a database entry of a "trusted user".

The additional verification processing may further include a verification of security features of the official documents.

Other additional verification steps may optionally be included in step S340. This may include also procedures known to a skilled person as "Artificial Intelligence (Al)".

It is noted that the steps for verifying the identity, i.e., in particular steps S320, S330 and S340, may be performed by means of respective software directly in the terminal equipment used by the second user. Alternatively, these verification steps may be performed at a remote location, such as by a specific server having a trusted secure connection with the terminal equipment 1b of the second user.

Alternative embodiments for performing verification step S250 of Fig. 2 operate, for instance, without using image capturing and analysis technology.

A first exemplary alternative embodiment is based on wireless tag technology, such as RFID technology. It becomes more and more common that official documents suitable for identifying persons have implemented a wireless tag such as an RFID tag storing the information that is printed on the official document in electronic form. Hence, the official document can be "read" not only conventionally, by a natural person or by optical means such as scanning or capturing an image but also with suitable electronic means, aka RFID readers or transceivers, with which a growing number of electronic devices, in particular equipment of consumer electronics such as smart phones or tablet computers is equipped.

In respective embodiments, the terminal equipment of the second user is equipped with or associated with a respective transceiver suitable for reading out the information stored in a wireless tag of the official document. This results in information identifying the respective person being extracted from the document, in the same manner as this can be done, for instance, from an image captured by a camera and subsequent optical character recognition.

Further optional steps such as comparing the extracted data with entries in a database of "trusted users", or determining whether the extracted data correspond to a particular person to whom the access to the data file is allowed can be done in the same manner as described above. Also, it is possible to include the extracted data into a message to be sent to the first user as a feedback identifying the person who has access the data file. In this manner, it can be legally verified that the data file has been delivered to a particular person.

In similar alternative embodiments, instead of reading out an RFID tag, the respective data may be stored in a hardware circuit ("electronic chip") incorporated into the official document, that may be read out by means of respective hardware equipment incorporated in or associated with the second terminal equipment that reads out the data stored in the chip by direct electric contact.

In still similar alternative embodiments, the respective data may be read with the help of a scanner (an optical scanning device) with which the second terminal equipment is equipped or associated, without the need to capture a full image of the official document such as the "second image" described above. The further processing of the data may be based on OCR in such embodiments.

Although such embodiments do not provide sophisticated possibilities such as directly verifying the presence of the people by comparison of a face image captured in real-time with the respective image of the official document, they have the advantage that they are simple to implement and only rely upon the technology that is increasingly available with contemporary user terminals.

Another exemplary alternative embodiment does not employ a physical official document identifying the second user but an electronic copy ("elD") thereof that is pre-stored at the terminal equipment of the second user, in a secure manner. The respective data can then be directly extracted from the elD application and further processed in the same manner as described for the other embodiments. Such implementations are, for instance, particularly practicable if a smart phone is used as the terminal equipment of the second user.

As is readily understood by a skilled person, the steps for verifying the identity as described above with respect to Fig. 3 as well as the alternatives thereof can be applied for verifying the identity of the first user (sender) *mutatis mutandis.* Thereby, a mutual verification of the identity of sender and receiver is achieved. In particular embodiments, the possibility of uploading a file may be restricted to (first) users having successfully verified their identity.

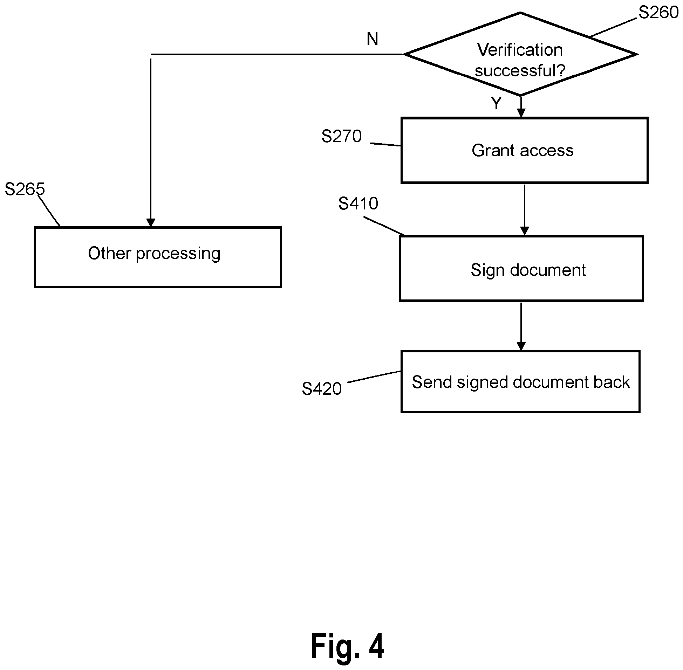

A further particular optional aspect of the present invention is illustrated in Fig. 4.

Fig. 4 relates to an embodiment, wherein the electronic data file that is transmitted from the first user to the second user includes a particular document that has to be confirmed by the second user by means of signature.

As illustrated in Fig. 4, after successful verification of the identity of the second user (S260: Y) and the user being granted access to the electronic data file including the document at step S270, the second user signs the document electronically at step S410. Subsequently, the electronically signed document is sent back to the first user at step S420. For electronically signing the document, any known method for providing a qualified verified electronic signature a skilled person is aware of or will become aware of in the future can be used. In particular, known elD applications that may be used for extracting the electronic document data from the official document for verifying the second user's identity in accordance with embodiments may include an electronic signature function as well.

By means of a respective functionality, a service such as a "registered letter" service offered by conventional mail service providers can be implemented within the framework of electronic document transmission according to the present invention.

In the framework of the present invention, it may be meaningful to not only verify the identity of the receiving person (second user) but also to determine the current location of the second user.

For this purpose, in addition to the verification of the identity, the location of the first participant (more specifically: the location of the terminal equipment used by the first participant to verify himself or herself) is determined. For instance, the terminal equipment itself may be equipped with a means for determining a location, such as by a satellite navigation system (GPS or others). A respective equipment is, for instance, common to smartphones, which may be used as the terminal equipment of the second user. A person skilled in the art is aware of other technical means to verifiably determine the location of the person and/or equipment used by the person. This may be based, for instance, on a usage of a particular cell of a cellular phone network, or an IP address which may be associated with a certain region. In principle, even further possibilities exist for verifying the location, which may be used in the framework of the present invention. For instance, an image of the person may be captured in real-time (in addition to the images captured for the identity verification), showing the intended first participant in front of some landmark such as a building which is known to the second participant as existing at the location to be verified and being immobile.

Further, the determined location information may be included in the signal to be transmitted to the site of the first user. In particular, this information is included in the same signal including the verified identity data of the first participant, as an additional data item. Alternatively, it is possible that the location information is included in a different signal to be transmitted separately.

In summary, the present invention relates to a method for securely transmitting an electronic data file, in particular, a document, from a first user using first terminal equipment to a second user using second terminal equipment over a network. Access to the electronic data file by the second user (receiver) requires the second user to verify his or her personal identity based on an official document identifying the person. After successful verification, access to the data file by the second user is granted and a feedback to the first user is generated confirming that the data file has been accessed. Consequently, at the same time this confirms successful verification of the identity of the receiver. Access to the data file may be limited to a particular person (or group of persons) that has been predetermined by the first user (sender) in advance, in which case the feedback may preferably include respective information confirming that the predetermined person has accessed the file. Alternatively, any person who was able to successfully verify his or her identity can be granted access to the data file.

## Claims

1. A method of transmitting an electronic data file from a first user via a network (N), for being accessed by a second user, the method comprising the steps of
uploading (S200) the data file being addressed to a receiver address to the network (N), by means of first terminal equipment (1a) of the first user;
generating (S210) a message that the data file has been uploaded and transmitting (S220) said message to second terminal equipment (1b) of the second user, associated with said receiver address;
inputting (S240) an instruction for access to the data file, at the second terminal equipment (1b);
upon getting the instruction, the second terminal equipment (1b) issuing a request to verify the identity of the second user using the second terminal equipment (1b);
verifying (S250) the identity of the second user, on the basis of an official document identifying the second user;
after successful verification of the identity of the second user (S260: Y), granting (S270) the second user access to the data file at the second terminal equipment (1b); and
generating and transmitting (S280) a message to the first user that the data file has been accessed.

2. A method according to claim 1, wherein the step (S250) of verifying the identity of the second user includes the steps of
capturing (S300) a face image of the second user, as a first image;
capturing (S310) an image of the official document identifying the second user, as a second image, the official document including a face image of the second user together with further data identifying the second user; and
verifying the identity of the second user at least by comparing (S320) the first image with the face image included in the second image, by means of technical image analysis.

3. A method according to claim 1, wherein the step (S250) of verifying the identity of the second user includes the steps of
reading information from a wireless tag included in the official document identifying a second user, by said terminal equipment of the second user, and
verifying the identity of the second user on the basis of the read information.

4. A method according to claim 1, wherein
said terminal equipment (1b) of the second user stores, in a predetermined application, data of the official document identifying the second user, and
the step (S250) of verifying the identity of the second user is performed on the basis of the data of the official document stored in said terminal equipment (1b) of the second user.

5. A method according to any of claims 1 to 4, wherein said electronic data file includes electronic data of a document, the method further comprising the steps of
the second user electronically signing (S410) the document, after successful verification (S260: Y) of the identity of the second user and the second user accessing (S270) the data file; and
the second user sending (S420) the signed document back to the first user.

6. A method according to any of claims 1 to 5, wherein the second user being allowed to get access to said data file being limited to a particular person, the method further comprising the steps of
the first user defining a particular person as the second user allowed to get access to the data file by entering data included in the official document identifying the second user and transmitting the entered data to said second terminal equipment (1b) before said step (S200) of uploading the data file to the network (N);
comparing the entered data defining the particular person with respective data extracted from the official document in said step (S250) of verifying the identity of the second user, and
granting (S270) the second user access to the data file only if the entered data and the data extracted from the official document coincide.

7. A method according to any of claims 1 to 6, further comprising the step of
providing information indicating the verified identity of the second user to the first user, wherein said step of providing information comprises the steps of
generating a signal including verified data identifying the second user on the basis of data extracted from the official document identifying the second user; and
transmitting said signal to the first terminal equipment of the first user.

8. A method according to any of claims 1 to 7, further comprising the steps of
verifying the identity of the first user, before said step (S200) of uploading the data file to the network (N); and
transmitting information indicating the verified identity of the first user to the second user,
wherein the step (S200) of uploading the file is enabled only after successful verification of the identity of the first user.

9. A method according to any of claims 1 to 8, wherein said data file uploaded to the network (N) is sent to the second terminal equipment (1b) but is electronically protected from access until successful verification (S260: Y) of the identity of the second user.

10. A method according to claim 9, wherein said protection is implemented by encryption or password protection and, upon successful identity verification (S260: Y), the second user is provided with a decryption key or password.

11. A method according to any of claims 1 to 4, 6, 8, and 9, further comprising the step (S265) of rejecting access to the data file by the second user when said step (S250) of verifying the identity of the second user was not successful (S260: N).

12. A method according to any of claims 1 to 11, wherein said data file is uploaded to a server (S) on the network (N), and said server (S) grants the second user access to the file by allowing the second user to download the file to the second terminal equipment (1b), upon successful verification (S260: Y) of the identity of the second user.

13. A method according to any of claims 1 to 11, wherein said data file is uploaded to a server (S) on the network (N), and said server (S) grants the second user access to the file by allowing the second user remote access to the data file on the server (S), upon successful verification of the identity of the second user (S260: Y).

14. A method according to claim 12 or 13, wherein said server (S) generates and transmits the message to the first user that the data file has been accessed.

15. A system for transmitting an electronic data file from a first user via a network (N), for being accessed by a second user, the system comprising
first terminal equipment (1a) of the first user and
second terminal equipment (1b) of the second user,
wherein the first terminal equipment (1a) being adapted to
upload the data file being addressed to a receiver address to the network (N);
generate a message that the data file has been uploaded and transmit said message to the second terminal equipment (1b) associated with said receiver address;
the second terminal equipment (1b) comprising a user interface for inputting an instruction for access to the data file and being adapted to, upon getting the instruction, issue a request to verify the identity of the second user using the second terminal equipment (1b);
the system further including equipment (1b; S) for verifying the identity of the second user, on the basis of an official document identifying the second user, and being adapted to
grant the second user access to the data file at the second terminal equipment (1b), after successful verification of the identity of the second user; and
generate and transmit a message to the first user that the data file has been accessed.
